# EUROPÄISCHE PATENTSCHRIFT

(11) **EP 2 490 266 B1**
(45) Veröffentlichungstag und Bekanntmachung des Hinweises auf die Patenterteilung: **06.09.2017**
(21) Anmeldenummer: 12000963.4
(22) Anmeldetag: 14.02.2012
(51) Int. Cl.: H02S 40/34

(54) **Anschlussdose, Verfahren zum Herstellen sowie Verwendung der Anschlussdose**
Connection box, method for production and use of the connection box
Boîte de jonction, procédé de fabrication et utilisation de la boîte de jonction

(30) Priorität: 18.02.2011 DE 102011011715
(43) Veröffentlichungstag der Anmeldung: 22.08.2012
(73) Patentinhaber: Yamaichi Electronics Deutschland GmbH, 85609 Aschheim-Dornach (DE)
(72) Erfinder: Eberle, Erwin, 80687 München (DE); Quiter, Michael, 57482 Wenden (DE); Braun, Sven, 81377 München (DE)
(74) Vertreter: Müller-Boré & Partner Patentanwälte PartG mbB

(56) Entgegenhaltungen:
- WO-A2-2010/025223
- DE-B3- 10 334 935
- JP-A- 2006 351 606

## Beschreibung

Die Erfindung betrifft eine Anschlußdose, ein Verfahren zum Herstellen einer Anschlußdose und eine Verwendung der Anschlußdose.

Herkömmliche Solarmodule zur Erzeugung elektrischer Energie aus Sonnenlicht als Beispiel einer bevorzugten Leiterplatte umfassen eine oder mehrere einzelne Solarzellen. Je nach gewünschter vom Solarmodul zur Verfügung zu stellenden Spannung und/oder Stromstärke werden einzelne Solarzellen innerhalb des Moduls parallel und/oder in Reihe geschaltet und damit zu Solarzellengruppen zusammengefaßt. Die Solarzellengruppen werden zu einem flachen Solarmodul zusammengefaßt. Die elektrischen Anschlußelemente der Solarzellengruppen des Solarmoduls werden nach außen geführt.

Bei partieller Verringerung der Bestrahlungsintensität durch Sonnenlicht auf einzelne Solarzellen bzw. Solarzellengruppen, beispielsweise durch Verschmutzung oder Schattenwurf, können unter anderem folgende Effekte auftreten:
(1) Eine (gleichmäßige) Verringerung der Bestrahlungsintensität innerhalb der zusammengeschalteten Solarzellengruppen führt zu einer Leistungsverminderung der jeweiligen Solarzellengruppe.
(2) Durch eine partielle Abschattung einer Solarzelle innerhalb einer Solarzellengruppe wirkt diese abgeschattete Solarzelle als Sperrdiode bzw. Widerstand innerhalb des Stromkreises der Solarzellengruppe, was zum einen dazu führen kann, daß die gesamte Solarzellengruppe keine elektrische Energie mehr liefern kann und zum anderen zu einer Beschädigung der abgeschatteten Solarzelle und damit zum dauerhaften Ausfall der Solarzellengruppe führen kann.

In jedem Fall können zwischen den herausgeführten Anschlüssen der Solarzellengruppen eines Solarmoduls, je nach Bestrahlungsintensität auf die einzelnen Solarzellen, unterschiedliche Spannungen anliegen. Eine Reihenschaltung der Solarzellengruppen durch entsprechende Schaltung der nach außen geführten Anschlüsse führt analog zu den oben genannten Problemen.

Um die mit der unterschiedlichen Bestrahlungsintensität der Solarzellen verbundenen Probleme zu vermeiden, können sogenannte Bypass-Dioden oder Gleichstromsteller (DC-DC-Konverter) verwendet werden, die elektrisch mit den Solarzellengruppen verbunden sind. Die Bypass-Dioden haben die Wirkung, daß der Stromfluß durch das Solarmodul an Solarzellengruppen, welche eine nur geringe Leistung liefern, vorbei geleitet wird, d.h. die Anschlußelemente dieser Solarzellengruppe eines Solarmoduls werden durch die Bypass-Diode kurz geschlossen und die entsprechende Solarzellengruppe dadurch überbrückt. Somit liefert eine solche Solarzellengruppe zwar keinen Anteil mehr zur Gesamtleistung des Solarmoduls, der Gesamtstromfluß durch das Solarpaneel ist jedoch im wesentlichen ungehindert und eine Beschädigung einzelner Solarzellen wird verhindert. Die Gleichstromsteller haben die Wirkung, daß die von einer abgeschatteten Solarzellengruppe erzeugte elektrische Spannung auf einen vorbestimmbaren Sollwert transformiert wird, wobei diese transformierte Spannung in Form von transienten Signalen bzw. Impulsen bereitgestellt wird.

Solarpaneele, umfassen daher neben dem Solarmodul in der Regel eine elektrische Anschlußdose mit weiteren elektronischen Komponenten wie beispielsweise zumindest eine Bypass-Diode oder zumindest einen Gleichstromsteller. Die Solarzellen in einem Solarmodul sind in der Regel durch flache dünne Leiterbänder miteinander verbunden. Diese Leiterbänder werden aus dem Solarmodul als Anschlußelemente heraus geführt, und mit einer in der Anschlußdose angeordneten elektrischen Kontaktvorrichtung kontaktiert. Die Anschlußdose des Solarpaneels weist daher in der Regel auf der dem Solarmodul zugewandten Seite eine Anschlußeinführöffnung auf, durch welche die Leiterbänder hindurch geführt, umgebogen und beispielsweise an Anschlußklemmen angeschlossen werden.

Es versteht sich, daß die elektronischen Komponenten während der Herstellung und während des langjährigen Betriebs im Freien vor Einflüssen geschützt werden müssen, welche die Lebensdauer dieser Komponenten verkürzt. Zum Beispiel müssen die elektrischen Komponenten vor Korrosion durch Feuchtigkeit sowie vor zu hohen Temperaturen, welche die verbauten Halbleiter beschädigen könnten, geschützt werden

Die Druckschrift WO 2010/025223 A2 offenbart eine Anschlußdose für ein Solarmodul gemäß dem Oberbegriff des Anspruchs 1.

Die Druckschrift DE 103 34 935 B3 offenbart eine Anschlußeinrichtung für ein Solarmodul, welches in einem Anschlußgehäuse untergebracht ist und mit Solarelementen verbindbar ist. Die Solarelemente sind durch flache Verbindungsleiter miteinander verbunden und in einen transluziden Scheibenverbund eingebettet. Über eine Öffnung in einer der Scheiben des Scheibenverbundes wird der Strom über federnde Kontaktelemente entnommen, die in elektrischem Kontakt zu den Verbindungsleitern der Solarelemente stehen.
Es ist daher Aufgabe der Erfindung, eine elektrische Anschlußdose, ein Verfahren zum Herstellen einer Anschlußdose sowie eine Verwendung der Anschlußdose bereitzustellen, welche zum einen die elektrischen Kontakte zuverlässig vor Feuchtigkeit schützt und zum anderen eine einfache und kostengünstiges Herstellen mit verringertem Ausschuß ermöglicht.

Die Aufgabe wird durch eine Anschlußdose mit den Merkmalen des Anspruchs 1, ein Verfahren zum Herstellen der Anschlußdose mit den Merkmalen des Anspruchs 7 und eine Verwendung der Anschlußdose mit den Merkmalen des Anspruchs 10 gelöst. Bevorzugte Ausführungsformen sind Gegenstand der abhängigen Ansprüche.

### Anschlußdose gemäß einem Aspekt

Ein Aspekt der vorliegenden Erfindung betrifft eine Anschlußdose für eine Leiterplatte, insbesondere für ein Solarmodul, umfassend:
- eine Gehäusevorrichtung mit einem Grundelement, einem Kontaktvorrichtungsdeckelement und einem Vergußelement;
- eine Kontaktvorrichtung mit zumindest einem Leiteranschlußelement und zumindest einem Kontaktelement, wobei jedes der Kontaktelemente mit einem elektrischen Leiter der Leiterplatte kontaktierbar ist;
- zumindest ein Anschlußelement mit zumindest einem elektrischen Leiter, wobei der elektrische Leiter ein zugeordnetes Leiteranschlußelement der Kontaktvorrichtung kontaktiert,
wobei die Kontaktvorrichtung bereichsweise in einer von dem Grundelement und dem Kontaktvorrichtungsdeckelement ausgebildeten Kontaktvorrichtungsaufnahme angeordnet ist,
wobei das Vergußelement als Gußteil ausgebildet ist und eine innige Verbindung mit dem Grundelement, dem Kontaktvorrichtungsdeckelement und dem zumindest einen Anschlußelement aufweist, um das Kontaktvorrichtungsdeckelement (22) mit dem Grundelement (20) zu verbinden und
wobei die Kontaktvorrichtungsaufnahme im wesentlichen frei von dem Vergußelement ist.

Vorteilhafterweise weist die Anschlußdose nur eine geringe Anzahl von Einzelteilen auf, wobei die Anschlußdose einfach und kostengünstig herzustellen ist und trotzdem eine erhöhte Festigkeit gegenüber mechanischen Einflüssen aufweist. Insbesondere wird durch die innige Verbindung des Vergußelements mit den weiteren Elementen das Innere der Anschlußdose gegen mechanische Einwirkung geschützt. In anderen Worten kann vorteilhafterweise die Gehäusevorrichtung umfassend das Grundelement, das Kontaktvorrichtungsdeckelement und das Vergußelement nicht mehr geöffnet werden bzw. können die zuvor genannten Elemente nicht voneinander getrennt werden, ohne daß die Anschlußdose zerstört wird. Eine Manipulation der im Inneren der Anschlußdose befindlichen elektrischen bzw. elektronischen Bauteile ist dadurch vorteilhafterweise ausgeschlossen.

Bevorzugt ist durch die innige Verbindung des Vergußelements mit dem Grundelement und dem Kontaktvorrichtungsdeckelement die Gehäusevorrichtung zumindest bereichsweise feuchtigkeitsdicht verschlossen. Mit anderen Worten, können insbesondere Bauteile, welche in der Kontaktvorrichtungsaufnahme bzw. zwischen dem Grundelement und dem Kontaktvorrichtungsdeckelement angeordnet sind durch das Vergußelement, das Grundelement und das Kontaktvorrichtungsdeckelement derart umfangen bzw. eingeschlossen sein, daß diese Bauteile vorteilhafterweise vor Feuchtigkeit von außerhalb der Anschlußdose geschützt sind. Weiter vorteilhafterweise weist die Anschlußdose dabei eine geringe Anzahl von dichtenden Einzelteilen auf, ist einfach und kostengünstig herstellbar und weist eine erhöhte Dichtigkeit gegenüber Feuchtigkeit auf. Insbesondere wird durch die innige Verbindung des Vergußelements mit den weiteren Elementen, wie beispielsweise auch einem Deckel und dem Solarmodul, an welchem die Anschlußdose im Betriebszustand angeordnet ist, das Innere der Anschlußdose während des betriebsgemäßen Gebrauchs gegen Feuchtigkeit der Umgebung abgedichtet. In anderen Worten kann vorteilhafterweise an dem zumindest einen Leiteranschlußelement im wesentlichen keine Feuchtigkeit in die Anschlußdose eindringen, so daß im Inneren der Anschlußdose befindliche elektrische bzw. elektronische Bauteile vor Kurzschlüssen und Korrosion geschützt sind.

Vorzugsweise besteht das Vergußelement aus einem weicheren bzw. flexibleren Material als das Grundelement und/oder das Kontaktvorrichtungsdeckelement. Die Gehäusevorrichtung bzw. das Grundelement, die Kontaktvorrichtungsdeckelement und/oder das Vergußelement kann bereichsweise aus einem Polymer, bevorzugt aus Polyester wie beispielsweise PBT oder glasfaserverstärktem Polyester, oder aus einem Elastomer, bevorzugt einem thermoplastischen Elastomer (TPE) bzw. einem thermoplastsichen Vulkanisat (TPV), bestehen.

Die Schmelztemperatur des Materials der Gehäusevorrichtung, insbesondere des Vergußelements kann bei etwa 170 Grad Celsius bis etwa 265 Grad Celsius liegen. Bevorzugt liegt die Schmelztemperatur des Vergußelements unterhalb der Schmelztemperatur des Grundelements und/oder des Kontaktvorrichtungsdeckelements. Besonders bevorzugt können das Grundelement und das Kontaktvorrichtungsdeckelement aus einem PBT mit einer Schmelztemperatur von etwa 270 Grad Celsius ausgebildet sein, während das Vergußelement aus einem thermoplastischen Elastomer mit einer Schmelztemperatur von etwa 170 Grad Celsius bis etwa 210 Grad Celsius ausgebildet ist. Weiter bevorzugt kann das Material des Vergußelements beim Auskühlen bzw. Aushärten schrumpfen. Das Material des Vergußelements ist also bevorzugt schrumpfbar. Der Begriff "schrumpfbar", wie er in dieser Anmeldung verwendet wird, beschreibt eine Volumenänderung, insbesondere eine Volumenreduzierung um zwischen etwa 0,1% und etwa 5%, bevorzugt zwischen etwa 0,2% und etwa 2%, besonderes bevorzugt zwischen etwa 0,3% und etwa 0,7%.

Die durch den Schrumpfungsprozeß entstehende mechanische Spannung wirkt auf die vom Vergußelement bereichsweise eingehüllten bzw. kontaktierten Elemente, wie beispielsweise das Grundelement, das Kontaktvorrichtungsdeckelement und das zumindest eine Anschlußelement. Dadurch wird vorteilhafterweise eine feuchtigkeitsdichte Verbindung zwischen diesen Elementen erzeugt ohne daß es weiterer Dichtelemente bedarf. Vorteilhafterweise sind die Bauteile der Kontaktvorrichtung bzw. die an der Kontaktvorrichtung angeordneten Halbleiterbauteile in der Kontaktvorrichtungsaufnahme vor den durch das Schrumpfen des Vergußelements erzeugten mechanischen Spannungen entkoppelt bzw. geschützt. Daher wirken weiter vorteilhafterweise im wesentlichen keine vom Vergußelement erzeugten mechanischen Spannungen auf die Kontaktstellen bzw. Lötstellen der an der Kontaktvorrichtung angeordneten Bauteile, so daß die Kontaktsicherheit dieser Bauteile erhöht ist.

Um das Vergußelement als Gußteil auszubilden, ist das Material des Vergußelements flüssig auf das Grundelement und das Kontaktvorrichtungsdeckelement aufgetragen, wobei eine innige Verbindung mit diesen durch Abkühlen und/oder Aushärten des Materials des Vergußelements erzeugt ist. Vorteilhafterweise verhindert das Kontaktvorrichtungsdeckelement, daß das Material des Vergußelements in flüssigem, heißem Zustand die Kontaktvorrichtung im Bereich der Kontaktvorrichtungsaufnahme kontaktiert, welche von dem Grundelement und dem Kontaktvorrichtungsdeckelement ausgebildet ist. Vielmehr ist das Material des Vergußelements in seiner flüssigen Phase durch das Kontaktvorrichtungsdeckelement daran gehindert, die Kontaktvorrichtungsaufnahme zu füllen. Mit anderen Worten bleibt die Kontaktvorrichtungsaufnahme im wesentlichen frei von dem Vergußelement bzw. von dem Material des Vergußelements. Dabei bedeutet "im wesentlichen frei", daß kein elektrisches Bauteil bzw. Halbleiterbauteil, welches an der Kontaktvorrichtung angeordnet ist, durch das Vergußelement mechanisch kontaktiert ist. Weiter kann "im wesentlichen frei" bedeuten, daß weniger 10 Prozent, bevorzugt weniger als 5 Prozent, insbesondere weniger als 1 Prozent des Volumens der Kontaktvorrichtungsaufnahme mit dem Material des Vergußelements gefüllt ist.

Vielmehr verbleibt ein Gas, in der Regel Luft, in der Kontaktvorrichtungsaufnahme, welches gegenüber dem heißen Material des Vergußelements als thermischer Isolator wirkt. Mit anderen Worten verbleibt ein Hohlraum zwischen dem Grundelement und dem Kontaktvorrichtungsdeckelement, welcher nicht mit dem Material des Vergußelements gefüllt ist. Daher werden vorteilhafterweise hitzeempfindliche Bauteile, die innerhalb des geschützten Bereiches der Kontaktvorrichtungsaufnahme angeordnet sind, vor Beschädigungen durch Hitzeeinwirkung geschützt. Weiter bevorzugt umfaßt das Kontaktvorrichtungsdeckelement ein thermisch isolierendes Material. Insbesondere kann das Kontaktvorrichtungsdeckelement aus einem thermisch isolierenden Material bestehen. Ein thermisch isolierendes Material im Sinne der Anmeldung zeichnet sich dadurch aus, daß die Wärmeleitfähigkeit λ des thermisch isolierenden Materials weniger als 1 Wm⁻¹K⁻¹, insbesondere etwa 0,3 Wm⁻¹K⁻¹, bevorzugt weniger als 0,5 Wm⁻¹K⁻¹, bevorzugt weniger als 0,1 Wm⁻¹K⁻¹ beträgt. Ein beispielhaftes thermisch isolierendes Material ist geschäumtes Polystyrol.

Weiterhin ist die Gehäusevorrichtung durch die innige Verbindung zwischen dem Vergußelement und dem Grundelement und/oder dem Kontaktvorrichtungsdeckelement vorteilhafterweise feuchtigkeitsdicht verschlossen, insbesondere gemäß der Spezifikation IP67. Besonders bevorzugt erfüllt die Gehäusevorrichtung die Brandschutzklasse V-0 und ist bis zu 1000 V Spannung elektrisch isolierend.

Unter dem Begriff "innige Verbindung" zwischen zwei Körpern wird im Sinne der Anmeldung eine direkte, unmittelbare mechanische Kontaktierung in einem Kontaktbereich bzw. einer Kontaktfläche verstanden. Insbesondere kann die innige Verbindung durch Aufschrumpfen eines umfangenden Körpers auf einen anderen umfangenen Körper erfolgen, so daß der umfangende Körper im Kontaktbereich eine Kraft bzw. mechanische Spannung auf den umfangenen Körper ausübt, so daß durch eine elastische bzw. plastische Verformung der beiden Körper im Kontaktbereich im wesentlichen kein Zwischenraum zwischen den beiden Körpern besteht. Insbesondere können die beiden Körper im Kontaktbereich miteinander verschmolzen sein.

Unter dem Begriff "feuchtigkeitsdicht" wird im Sinne der vorliegenden Anmeldung eine Dichtheit bzw. eine Barriere gegenüber einem Fluid, insbesondere Wasser oder Wasserdampf verstanden, wobei das Fließen bzw. Verlagern der Feuchtigkeit verhindert wird. Mit anderen Worten ist ein Kontaktbereich zwischen zwei Körpern, die insbesondere innig miteinander verbunden sind, genau dann feuchtigkeitsdicht, wenn ein Fluid nicht entlang des (flächigen) Kontaktbereichs in das Innere der Anschlußdose eindringen kann.

Das Leiteranschlußelement der Kontaktvorrichtung kann insbesondere eine Lötstelle, eine Crimpstelle und/oder Kabelbefestigung umfassen, aber auch insbesondere ein Bereich eines flachen Leiters sein.

Jedes der Kontaktelemente ist derart angeordnet ist, daß die Kontaktelemente mit einem zugeordneten elektrischen Leiter der Leiterplatte kontaktierbar ist, wobei die elektrischen Leiter bevorzugt mittels zumindest eines Fixierelementes an den Kontaktelementen fixierbar ist. Vorzugsweise ist das zumindest eine Fixierelement elastisch rückstellfähig ausgebildet. Das Fixierelement kann dabei aus Kunststoff und/oder Metall bestehen.

Vorzugsweise weist die Kontaktvorrichtung zumindest ein Halbleiterbauteil auf, welches zwei Leiteranschlußelemente und/oder zumindest zwei der Kontaktelemente und oder ein Leiteranschlußelement mit einem der Kontaktelemente elektrisch verbindet.

Bevorzugt kann das Halbleiterbauteil eine Bypass-Diode sein, welche zwei Kontaktelemente miteinander elektrisch verbindet. Weiter bevorzugt kann das Halbleiterbauteil eine Überspannungsschutzdiode sein, welche die Leiteranschlußelemente miteinander elektrisch verbindet. Weiter bevorzugt kann die Kontaktvorrichtung auch Schaltungen umfassen, welche Halbleiterbauteile wie Dioden, Transistoren und/oder integrierte Schaltkreise (ICs) umfassen, wie beispielsweise zumindest einen Gleichstromsteller (DC-DC-Konverter), eine Diagnoseschaltung, eine Kommunikationsschnittstelle usw..

Die Kontaktvorrichtung kann eine gedruckte Schaltung bzw. Platine (printed circuit board, PCB) aufweisen oder zumindest eine Metallplatte umfassen. Zumindest zwei oder mehrere Metallplatten der Kontaktvorrichtung können untereinander elektrisch und/oder mechanisch mittels eines Halbleiterbauteils verbunden sein, beispielsweise mittels eine Diode, insbesondere einer Diode in SMD Bauform. Insbesondere ist die Kontaktvorrichtung ausgelegt dauerhaft Ströme von mehr als 10 A, bevorzugt mehr als 15 A von einem Leiteranschlußelement zum anderen zu leiten.

Die Kontaktvorrichtung kann eine Befestigungseinrichtung aufweisen, um die Kontaktvorrichtung an einer komplementären Befestigungseinrichtung des Grundelements oder des Kontaktvorrichtungsdeckelements zu befestigen.

Vorzugsweise ist das Kontaktvorrichtungsdeckelement mit dem Grundelement verriegelbar. Die Verriegelung kann dabei lösbar oder unlösbar erfolgen. Beispielsweise kann das Kontaktvorrichtungsdeckelement zumindest eine Verriegelungseinrichtung aufweisen, die bevorzugt einstückig mit dem Kontaktvorrichtungsdeckelement ausgebildet ist, wobei die Verriegelungseinrichtung mit einer zugeordneten komplementären Verriegelungseinrichtung des Grundelements verriegelbar ist.

Nach dem Anordnen der Kontaktvorrichtung an das Grundelement oder das Kontaktvorrichtungsdeckelement und dem anschließenden Verriegeln von Kontaktvorrichtungsdeckelement und Grundelement bilden das Grundelement und das Kontaktvorrichtungsdeckelement die Kontaktvorrichtungsaufnahme aus, in welche die Kontaktvorrichtung bereichsweise aufgenommen und insbesondere fixiert ist. Weiterhin ist die Kontaktvorrichtungsaufnahme nach dem Verriegeln im wesentlichen gegenüber dem Eindringen von flüssigem Material des Vergußelements geschützt.

Vorzugsweise weist das Kontaktvorrichtungsdeckelement zumindest eine Öffnung auf, durch welche ein zugeordnetes der Leiteranschlußelemente zugänglich ist oder durch welche ein zugeordnetes der Leiteranschlußelemente, beispielsweise in Form einer Lötfahne oder eines Verbinders, hindurchragt, um mit dem elektrischen Leiter eines zugeordneten Anschlußelements kontaktiert zu sein. Besonders bevorzugt umfaßt das Anschlußelement ein Anschlußkabel mit zumindest einem elektrischen Leiter, welcher mit dem zugeordneten Leiteranschlußelement elektrisch kontaktiert ist. Ein Isoliermantel des Anschlußkabels kann mit dem Vergußelement innig verbunden sein, um das Anschlußkabel feuchtigkeitsdicht aus der Anschlußdose heraus zu führen. Bevorzugt ist das Vergußelement zumindest teilweise mit dem Isoliermantel des Anschlußkabels verschmolzen.

Besonders bevorzugt kann zumindest eines der Anschlußelemente, insbesondere beide Anschlußelemente, als elektrischer Verbinder ausgebildet sein. Dabei kann der Verbinder einen elektrischen Leiter beispielsweise in Form einer Lötfahne, eines Stiftes, einer Hülse oder ähnliches aufweisen, wobei dieser elektrische Leiter des Verbinders mit dem zugeordneten Leiteranschlußelement kontaktierbar ist. Das elektrische Kontaktieren des elektrischen Leiters des Anschlußelements kann dabei insbesondere auch ein Befestigen, beispielsweise durch Löten, Schrauben, Klemmen, Kleben usw. , mit dem zugeordneten Leiteranschlußelement umfassen, wodurch unter anderem auch ein elektrischer Kontakt ausgebildet ist.

Mittels des zumindest einen Anschlußelements kann das Solarmodul über die Anschlußdose mit einem externen elektrischen Verbraucher elektrisch kontaktiert werden.

Vorzugsweise weist die Gehäusevorrichtung zumindest eine Leiteraufnahmeeinrichtung mit einer leiterplattenseitigen Öffnung und einer Montageöffnung auf, wobei die Kontaktelemente derart in der Leiteraufnahmeeinrichtung angeordnet sind, daß jedes der Kontaktelemente durch einen zugeordneten elektrischen Leiter der Leiterplatte kontaktierbar ist und die Montageöffnung feuchtigkeitsdicht durch einen Gehäusedeckel verschließbar ist.

Durch bzw. in die leiterplattenseitige Öffnung können die elektrischen Leiter der Leiterplatte zur Montage der Anschlußdose hindurch- bzw. hineingeführt werden. Über die Montageöffnung können Hände und/oder Werkzeug zumindest bereichsweise eingeführt werden, um die elektrischen Leiter mit den zugeordneten Kontaktelementen elektrisch zu verbinden und gegebenenfalls zu fixieren. Nach dem Kontaktieren ist die Montageöffnung durch den Gehäusedeckel feuchtigkeitsdicht verschließbar. Gegebenenfalls kann die Leiteraufnahmeeinrichtung über die Montageöffnung und/oder über eine Einfüllöffnung des Gehäusedeckel mit einer Vergußmasse vergossen werden. Diese Vergußmasse kann zum dem Material des Vergußelements identisch oder verschieden sein. Bevorzugt umfaßt der Gehäusedeckel ein Gehäusedeckeldichtelement. Weiter bevorzugt kann das Gehäusedeckeldichtelement ein O-Ring sein, welcher insbesondere in einer Nut des Gehäusedeckels gehalten wird. Es ist auch möglich, daß ein im wesentlichen flüssiges Dichtungsmaterial bereichsweise an den Gehäusedeckel appliziert, wobei nach dem Aushärten bzw. Erstarren des Dichtungsmaterials das Gehäusedeckeldichtelement ausgebildet bzw. geformt ist.

### Verfahren zum Herstellen einer Anschlußdose gemäß einem Aspekt

Ein Aspekt der vorliegenden Erfindung betrifft ein Verfahren zum Herstellen einer Anschlußdose für eine Leiterplatte umfassend die folgenden Schritte:
- Bereitstellen eines Grundelements einer Gehäusevorrichtung;
- Bereitstellen eines Kontaktvorrichtungsdeckelements einer Gehäusevorrichtung;
- Anordnen einer Kontaktvorrichtung mit zumindest einem Leiteranschlußelement und zumindest einem Kontaktelement an das Grundelement oder das Kontaktvorrichtungsdeckelement;
- Anordnen des Kontaktvorrichtungsdeckelements an das Grundelement, wobei die Kontaktvorrichtung bereichsweise zwischen dem Grundelement und dem Kontaktvorrichtungsdeckelement eingeschlossen ist;
- Kontaktieren zumindest eines elektrischen Leiters des zumindest einen Anschlußelements an das zugeordnete Leiteranschlußelement der Kontaktvorrichtung;
- Ausbilden des Vergußelements durch ein flüssiges Auftragen einer Gießmasse auf das Grundelement, das Kontaktvorrichtungsdeckelement und das zumindest eine Anschlußelement, wobei eine innige Verbindung zwischen diesen Elementen ausgebildet wird, um das Kontaktvorrichtungsdeckelement mit dem Grundelement zu verbinden und wobei der zwischen dem Grundelement und dem Kontaktvorrichtungsdeckelement eingeschlossene Bereich der Kontaktvorrichtung im wesentlichen frei von dem Vergußelement bleibt.

Das Vergußelement wird im wesentlichen flüssig aufgetragen, wobei das Ausbilden des Vergußelements insbesondere den Schritt umfaßt: Abkühlen und/oder Aushärten des flüssig aufgetragenen Materials des Vergußelements. Das Ausbilden des Vergußelements kann insbesondere durch Spritzgießen mittels einer Spritzgußform erfolgen.

Vorzugsweise kann durch das Abkühlen und/oder Aushärten des Vergußelements das Vergußelement schrumpfen und eine innige Verbindung dem Grundelement und/oder dem Kontaktvorrichtungsdeckelement erzeugen. Somit werden das Grundelement und das Kontaktvorrichtungsdeckelement miteinander verbunden bzw. befestigt, wobei bevorzugt die durch diese Elemente gebildete Kontaktvorrichtungsaufnahme zumindest bereichsweise bzw. zumindest bezüglich einer oder mehrere Seiten feuchtigkeitsdicht durch das Vergußelement, das Grundelement und das Kontaktvorrichtungsdeckelement eingeschlossen bzw. umschlossen wird. Mit anderen Worten kann das Vergußelement derart ausgebildet sein, daß die Anschlußdose unter Betriebsbedingungen, d.h. an einem Solarmodul befestigt, beispielsweise durch einen feuchtigkeitsdichtenden Kleber, und mit einem Gehäusedeckel verschlossen, feuchtigkeitsdicht ist. Mit anderen Worten sind die elektrischen bzw. elektronischen Bauteile der Anschlußdose feuchtigkeitsdicht gegenüber der Umwelt eingeschlossen, beispielsweise gemäß der Norm IP67.

Vorzugsweise wird das Kontaktvorrichtungsdeckelement mit dem Grundelement lösbar oder unlösbar verriegelt. Die Verriegelung erfolgt insbesondere bevor ein Anschlußelement mit einem zugehörigen Leiteranschlußelement kontaktiert wird und/oder bevor das Vergußelement ausgebildet wird.

Vorzugsweise weist die Kontaktvorrichtung zumindest ein Halbleiterbauteil auf, welches zwei Leiteranschlußelemente und/oder zumindest zwei der Kontaktelemente und oder ein Leiteranschlußelement mit einem der Kontaktelemente elektrisch verbindet. Insbesondere gelangt keines der Halbleiterbauteil beim Ausbilden des Vergußelements in Kontakt mit dem flüssigen, heißen Material des Vergußelements.

Vorzugsweise ist die Gießmasse ein Thermoplast. Weiter bevorzugt überschreitet die Temperatur der Kontaktvorrichtung und/oder eines an bzw. auf der Kontaktvorrichtung angeordneten Bauteils bzw. eines (Halbleiter-)Bauteils der Kontaktvorrichtung während des Ausbildens des Vergußelements mittels der Gießmasse nicht eine Temperatur von etwa 150 Grad Celsius, weiter bevorzugt von etwa 100 Grad Celsius und insbesondere von etwa 70 Grad Celsius.

Vorzugsweise besteht das Vergußelement aus einem Material bzw. wird aus einem Material ausgebildet, welches im festen Zustand weicher bzw. flexibler ist als das Grundelement und/oder das Kontaktvorrichtungsdeckelement bzw. deren Materialien im festen Zustand. Unter den Begriffen "flexibler" und "weicher" wird im Sinne dieser Anmeldung verstanden, daß der Elastizitätsmodul Ev und/oder der Schermodul G_{V} des Vergußelements kleiner ist als der Elastizitätsmodul EG und/oder der Schermodul G_{G} des Grundelements bzw. kleiner ist als der Elastizitätsmodul E_{K} und/oder der Schermodul G_{K} des Kontaktvorrichtungsdeckelements.

Weiter bevorzugt ist das Verhältnis E_{G}/E_{V} und/oder G_{G}/G_{V} größer als etwa 1,5, besonders bevorzugt größer als etwa 2, oder größer als etwa 5 oder größer als etwa 10, insbesondere größer als etwa 50 oder größer als etwa 100. Analog ist das Verhältnis E_{K}/E_{V} und/oder G_{K}/G_{V} bevorzugt größer als etwa 1,5, besonders bevorzugt größer als etwa 2, oder größer als etwa 5 oder größer als etwa 10, insbesondere größer als etwa 50 oder größer als etwa 100.

Das vergleichsweise harte bzw. starre Gehäuseelement und/oder Kontaktvorrichtungsdeckelement kann bzw. können beispielsweise bereichsweise aus Polyester, insbesondere PBT oder glasfaserverstärktem Polyester, aus Polystyrol, insbesondere geschäumten Polystyrol, bestehen. Der Elastizitätsmodul kann etwa 1 GPa bis etwa 11 GPa, insbesondere etwa 3 GPa oder etwa 10 GPa betragen. Die Schmelztemperatur des Materials der Gehäusevorrichtung, insbesondere der Polyamide, kann bei etwa 250°C bis etwa 275°C liegen.

Das vergleichsweise weiche bzw. flexible Vergußelement besteht vorzugsweise zumindest bereichsweise oder vollständig aus einem thermoplastischen Elastomer (TPE) bzw. einem thermoplastsichen Vulkanisat (TPV). Weiter bevorzugt besteht das flexible Dichtelement aus einem Polyolefin. Besonders bevorzugt besteht das flexible Dichtelement aus einem α-Vinyl-Copolymer, insbesondere einem Ethylen-Propylen-Copolymer. Beispielsweise kann das Vergußelement aus Ethylen, Propylen, thermoplastischem Gummi (Ethylene Propylene Thermoplastic Rubber, EPTR) bestehen. Der Temperaturbereich in dem die thermoplastischen Elastomere plastisch verformbar sind bzw. schmelzen können liegt vorzugsweise unterhalb der Schmelztemperatur des Materials des Grundelements bzw. des Kontaktvorrichtungsdeckelements (d.h. insbesondere von Polyamiden und Polystyrol). Insbesondere liegt der Temperaturbereich bei etwa 170°C bis etwa 250°C.

### Verwendung einer Anschlußdose gemäß einem Aspekt

Ein Aspekt der vorliegenden Erfindung betrifft eine Verwendung einer erfindungsgemäßen Anschlußdose und eines Solarmoduls als bevorzugte Leiterplatte zum Bereitstellen eines Solarpaneels, wobei die Anschlußdose an dem Solarmodul befestigt wird und die elektrischen Leiter des Solarmoduls mit den zugeordneten Kontaktelementen der Anschlußdose kontaktiert werden.

Bevorzugt wird der zumindest eine elektrische Leiter des Solarmoduls im wesentlichen kraftfrei in die Aufnahmeeinrichtung eingeführt. D.h. der elektrische Leiter muß während des Einführens keinen mechanischen Widerstand überwinden, z.B. Reibung an der Leiteraufnahmeeinrichtung, so daß vorteilhafterweise keine mechanische Belastung oder Verformung an dem elektrischen Leiter des Solarmodul erfolgt, welcher insbesondere ein elektrisches Leiterband sein kann.

Bevorzugt kann die Anschlußdose mittels eines Klebers an das Solarmodul befestigt bzw. geklebt werden. Die an dem Solarmodul befestigte und kontaktierte erfindungsgemäße Anschlußdose ist dazu verwendbar, das Solarmodul mit einem elektrischen Leistungsabnehmer zu verbinden, wobei die elektrische Verbindung des Leistungsabnehmers mit dem Solarmodul über die zumindest eine Kontaktvorrichtung der Anschlußdose erfolgt.

Vorzugsweise umfaßt das Bereitstellen des Solarpaneels den Schritt: Fixieren der elektrischen Leiter des Solarmoduls an den zugeordneten Kontaktelementen mittels zumindest eines Fixierelements.

Vorzugsweise umfaßt das Bereitstellen des Solarpaneels den Schritt: Bereitstellen zumindest eines Gehäusedeckels, welcher ausgelegt ist, eine Öffnung der Leiteraufnahmeeinrichtung feuchtigkeitsdicht zu verschließen. Das Bereitstellen des Gehäusedeckels beinhaltet insbesondere Anordnen des Gehäusedeckels an der Öffnung der Leiteraufnahmeeinrichtung, besonders bevorzugt feuchtigkeitsdichtes Anordnen des Gehäusedeckels an der Öffnung der Leiteraufnahmeeinrichtung.

Bevorzugt erfolgt die Fixierung der elektrischen Leiter an den zugeordneten Kontaktelement durch das Schließen des Gehäusedeckels mittels zumindest eines an dem Gehäusedeckel angeordneten Fixiermittels. Gegebenenfalls kann auch die elektrische Kontaktierung zwischen den elektrischen Leitern des Solarmoduls und den zugeordneten Kontaktelementen mittels des Fixiermittels erfolgen. Weiterhin vorzugsweise das Anordnen des Fixiermittels und das Anordnen des Gehäusedeckels in einem Schritt erfolgen, und zwar insbesondere dann, wenn das Fixiermittel und der Gehäusedeckel beim Anordnen miteinander verbunden sind.

### Figurenbeschreibung

Nachfolgend wird eine bevorzugte Ausführungsform der vorliegenden Erfindung anhand der beigefügten Zeichnungen beispielhaft erläutert. Es zeigt
Figur 1: eine Explosionsansicht eines Solarpaneels mit einer Anschlußdose;
Figur 2: eine perspektivische Schnittansicht der an das Solarmodul angeordneten Anschlußdose.

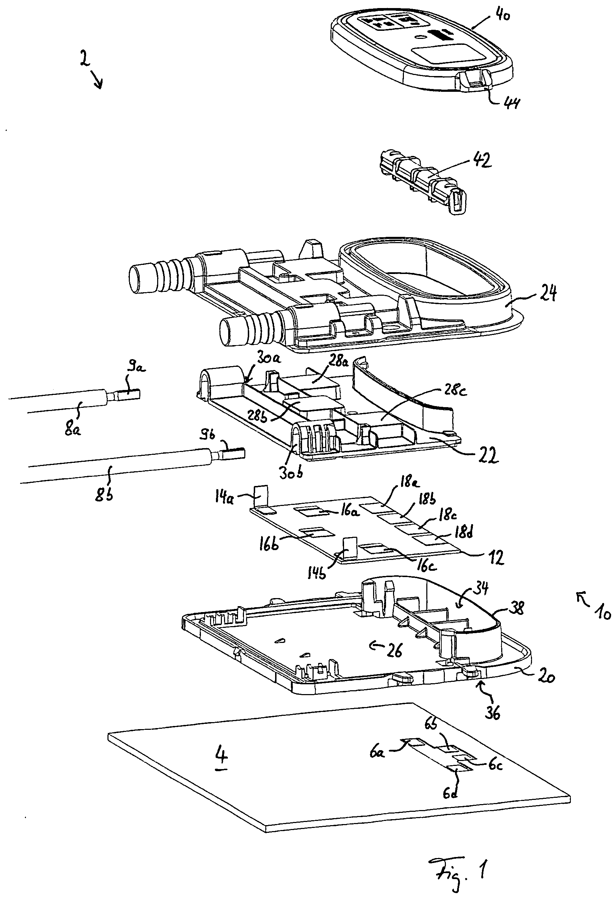

**Figur 1** zeigt eine Explosionsansicht eines Solarpaneels 2. Das Solarpaneel 2 umfaßt ein plattenförmiges Solarmodul 4 als Stromquelle mit vier elektrischen Leitern 6a, 6b, 6c, 6d zwischen denen eine Spannung anliegt, wenn das Solarmodul 4 beleuchtet wird. Um die elektrische Leistung aus dem Solarmodul 4 abzuleiten, werden zwei Anschlußkabel 8a, 8b als bevorzugte Anschlußelemente 8a, 8b mittels einer an dem Solarmodul angeordneten Anschlußdose 10 mit den elektrischen Leitern 6a-6d des Solarmoduls 4 elektrisch verbunden. Es versteht sich, daß auch andere Anschlußelemente vorgesehen sein können. Beispielsweise kann zumindest eines der Anschlußelemente als elektrischer Verbinder ausgebildet sein.

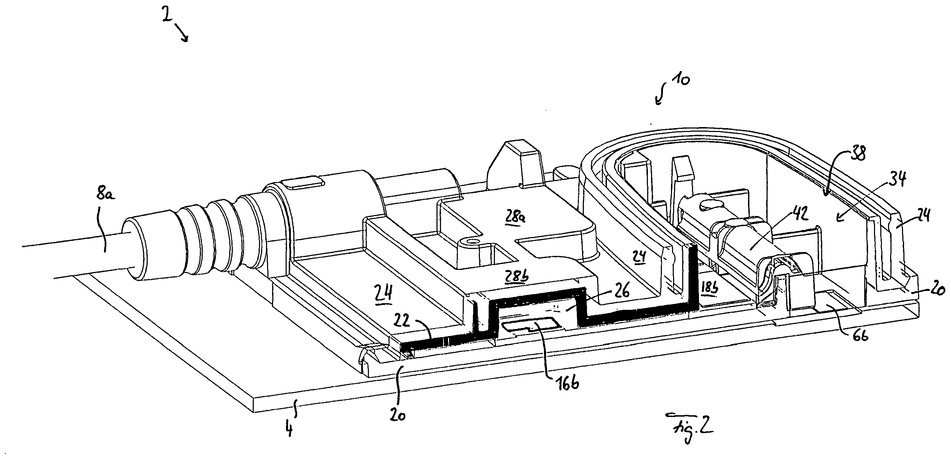

**Figur 2** zeigt eine perspektivische Schnittansicht der an das Solarmodul 4 angeordneten Anschlußdose 10 des in Figur 1 gezeigten Solarpaneels 2. Die folgende Beschreibung bezieht sich auf beide Figuren 1 und 2, wobei die gleichen Elemente in den Figuren mit gleichen Bezugszeichen versehen sind.

Die Anschlußdose 10 nimmt die zum Betrieb des Solarpaneels 2 notwendigen elektrischen bzw. elektronischen Bauteile auf und schützt die Bauteile vor mechanischen und chemischen Einwirkungen, wie beispielsweise Gewalteinwirkung und Korrosion. Vorteilhafterweise wird dies dadurch erreicht, daß die Anschlußdose 10 mechanisch stabil und feuchtigkeitsdicht ausgeführt ist.

Die elektrischen Bauteile der Anschlußdose 10 sind auf einer Leiterplatte bzw. Platine 12 als bevorzugter Kontaktvorrichtung 12 angeordnet. Die Kontaktvorrichtung 12 umfaßt zwei Leiteranschlußelemente 14a, 14b mit denen jeweils ein elektrischer Leiter 9a, 9b eines zugeordneten Anschlußkabels 8a, 8b elektrisch kontaktierbar ist. Weiter umfaßt die Kontaktvorrichtung 12 eine Mehrzahl von Kontaktelementen 18a, 18b, 18c, 18d, welche insbesondere der Anzahl der elektrischen Leiter 6a-6d des Solarmoduls 4 entspricht. Die äußeren Kontaktelemente 18a, 18d können mit den Leiteranschlußelementen 14a, 14b elektrisch verbunden sein.

Zwei benachbarte der Kontaktelemente 18a-18d sind jeweils mittels einer Bypass-Diode 16a, 16b, 16c elektrisch verbunden, welche gegebenenfalls einen Kurzschluß zwischen den benachbarten der Kontaktelemente 18a-18d erzeugt, wenn die an diesen Kontaktelementen angeschlossene Solarzellengruppe des Solarmoduls 4 derart abgeschattet ist, daß die erzeugte Spannung unter einen vorbestimmten Grenzwert fällt.

Die Kontaktvorrichtung 12 ist in einer Gehäusevorrichtung der Anschlußdose 10 feuchtigkeitsdicht aufgenommen. Die Gehäusevorrichtung umfaßt ein Grundelement 20, ein Kontaktvorrichtungsdeckelement 22 und ein Vergußelement 24. Das Grundelement 20 und das Kontaktvorrichtungsdeckelement 22 bilden eine Kontaktvorrichtungsaufnahme 26 aus, in welcher die Kontaktvorrichtung 12 in betriebsfähigen Zustand der Anschlußdose 10 bereichsweise angeordnet bzw. aufgenommen ist. Die Kontaktvorrichtung 12 kann bevorzugt eine Befestigungseinrichtung aufweisen, womit die Kontaktvorrichtung an dem Grundelement oder dem Kontaktvorrichtungsdeckelements befestigbar ist, bevor das Kontaktvorrichtungsdeckelement an dem Grundelement angeordnet und bevorzugt verriegelt wird. Das Kontaktvorrichtungsdeckelement 22 weist in der in Figur 1 gezeigten Ausführungsform Bauteilaufnahmen 28a, 28b, 28c auf, in welche die Bypass-Dioden 18a-18c aufgenommen sind, wenn das Kontaktvorrichtungsdeckelement 22 an der Kontaktvorrichtung 12 angeordnet ist.

Nach dem Anordnen bzw. Verriegeln von Kontaktvorrichtungsdeckelement 22 und Grundelement 20, ist die in der Kontaktvorrichtungsaufnahme 26 aufgenommene und fixierte Kontaktvorrichtung 12 im wesentlichen gegenüber dem Eindringen von aufzutragendem flüssigem, heißen Material des als Gußteil auszubildenden Vergußelements 24 geschützt. Das Kontaktvorrichtungsdeckelement 22 weist weiterhin zwei Öffnungen 30a, 30b auf, durch welche jeweils ein zugeordnetes Leiteranschlußelement 14a, 14b zugänglich ist. Die als Lötfahne 14a, 14b ausgebildeten Leiteranschlußelemente 14a, 14b ragen in diese Öffnungen 30a, 30b hinein bzw. hindurch und können daher nach dem Anordnen des Kontaktvorrichtungsdeckelements 22 an das Grundelement 20 mit den Anschlußkabeln 8a, 8b verlötet werden. Es versteht sich, daß das elektrische Kontaktieren der Anschlußkabel 8a, 8b auch durch Klemmen, Crimpen, oder ähnliches hergestellt werden könnte.

Da das Vergußelement 24 im Anschluß als Gußteil ausgebildet wird, beispielsweise durch Spritzgießen, wird eine innige Verbindung des Vergußelements 24 mit dem Grundelement 20, dem Kontaktvorrichtungsdeckelement 22 und den Anschlußkabeln 8a, 8b erzeugt. Dadurch wird die Kontaktvorrichtung 12 zumindest bereichsweise feuchtigkeitsdicht durch die Gehäusevorrichtung der Anschlußdose 10 eingeschlossen. Aufgrund der Anordnung des Kontaktvorrichtungsdeckelements 22 bleibt die Kontaktvorrichtungsaufnahme 26 bei dem Ausbilden des Vergußelements 24 im wesentlichen frei von dem flüssigen, heißen Material des Vergußelement. Die hitzeempfindlichen Halbleiterbauteile der Anschlußdose, also in diesem Fall die auf der Platine der Kontaktvorrichtung 12 angeordneten Bypass-Dioden 18a-18c, werden während des Spritzgießens des Vergußelements 24 bei der Fertigstellung der Anschlußdose 10 nicht von der heißen Gießmasse kontaktiert, so daß keine thermischen Beschädigungen der Bauteile auftreten und der Ausschuß bei der Produktion der Anschlußdosen 10 vorteilhafterweise reduziert werden kann. Dabei kann das Kontaktvorrichtungsdeckelement 22 aus einem thermisch isolierenden Material ausgebildet sein oder ein solches Material umfassen. Beispielhaft könnte geschäumtes Polystyrol als thermisch isolierendes Material verwendet werden. Je nach der thermischen Belastbarkeit der Halbleiterbauteile kann die Dicke des thermisch isolierenden Materials derart ausgewählt sein, daß die. Temperatur der Kontaktvorrichtung 12 während des Ausbildens des Vergußelements 24 eine Temperatur von etwa 150 Grad Celsius, bevorzugt von etwa 100 Grad Celsius und insbesondere von etwa 70 Grad Celsius nicht überschreitet.

Die Anschlußdose 10 umfaßt weiter eine Leiteraufnahmeeinrichtung 34 mit einer leiterplattenseitigen Öffnung 36 und einer leiterplattenabseitigen Öffnung bzw. Montageöffnung 38. Dabei sind die Kontaktelemente 18a-18d derart in der Leiteraufnahmeeinrichtung 34 angeordnet sind, daß die Kontaktelemente mit einem zugeordneten elektrischen Leiter 6a-6d der Leiterplatte 4 kontaktierbar ist. Zum Kontaktieren werden die elektrischen Leiter leiterplattenseitigen Öffnung 36 in die Leiteraufnahmeeinrichtung 34 eingeführt und manuell oder mittels eines Werkzeugs mit den zugeordneten Kontaktelementen 18a-18d kontaktiert. Hände bzw. Werkzeuge können zumindest bereichsweise durch die Montageöffnung 38 in die Leiteraufnahmeeinrichtung 34 eingeführt werden. Bevorzugt können die Leiter 6a-6d mittels zumindest eines Fixierelements 42 an den Kontaktelementen 18a-18d fixiert bzw. elektrisch kontaktiert werden.

Die Montageöffnung 38 kann durch einen Gehäusedeckel 40 feuchtigkeitsdicht verschlossen werden. Mittels eines Verriegelungselements 44 des Gehäusedeckels 40, welches mit einem komplementären Verriegelungselement lösbar oder unlösbar verriegelbar ist, kann der Gehäusedeckel 40 bevorzugt derart verriegelt werden, daß die Verriegelung ohne zumindest teilweisem Zerstören des Gehäusedeckels 40 und/oder der Gehäusevorrichtung unlösbar ist. An dem Gehäusedeckel 40 kann lösbar oder unlösbar zumindest ein Fixierelement 42 angeordnet sein. Die Anordnung kann durch verkleben, verschmelzen, verschrauben, vergießen, stecken, klemmen oder ähnliches erfolgen. Insbesondere kann das zumindest eine Fixierelement 42 mit dem Gehäusedeckel einstückig ausgebildet sein. Vorzugsweise bestehen dann das Fixierelement 42 und der Gehäusedeckel aus Kunststoff.

Jedes Kontaktelement 18a-18d kontaktiert ein zugeordnetes elektrisches Anschlußelement 6a-6d, wenn die Anschlußdose 10 an dem Solarmodul 4 montiert bzw. befestigt ist und sich die Anschlußdose 10 bzw. das Solarpaneel 2 im betriebsfähigen Zustand befindet, insbesondere nachdem der Gehäusedeckel angeordnet ist.

### Bezugszeichenliste

- 2: Solarpaneel
- 4: Leiterplatte bzw. Solarmodul
- 6a-d: elektrischer Leiter der Leiterplatte
- 8a-b: Anschlußkabel
- 9a,b: elektrischer Leiter der Anschlußkabel
- 10: Anschlußdose
- 12: Kontaktvorrichtung
- 14a,b: Leiteranschlußelement
- 16a-c: Bypass-Diode
- 18a-d: Kontaktelement
- 20: Grundelement
- 22: Kontaktvorrichtungsdeckelement
- 24: Vergußelement
- 26: Kontaktvorrichtungsaufnahme
- 28: Bauteilaufnahme
- 30: Öffnung
- 34: Leiteraufnahme
- 36: Anschlußeinführöffnung
- 38: Montageöffnung
- 40: Gehäusedeckel
- 42: Fixierelement
- 44: Verriegelungselement

## Patentansprüche

1. Anschlußdose (10) für eine Leiterplatte (4), insbesondere für ein Solarmodul (4), umfassend:
- eine Gehäusevorrichtung mit einem Grundelement (20), einem Kontaktvorrichtungsdeckelement (22) und einem Vergußelement (24);
- eine Kontaktvorrichtung (12) mit zumindest einem Leiteranschlußelement (14a, 14b) und zumindest einem Kontaktelement (18a-18d), wobei jedes der Kontaktelemente (18a-18d) mit einem elektrischen Leiter (6a-6d) der Leiterplatte (4) kontaktierbar ist;
- zumindest ein Anschlußelement (8a, 8b) mit zumindest einem elektrischen Leiter (9a, 9b), wobei der elektrische Leiter (9a, 9b) ein zugeordnetes Leiteranschlußelement (14a, 14b) der Kontaktvorrichtung (12) kontaktiert,
wobei die Kontaktvorrichtung (12) bereichsweise in einer von dem Grundelement (20) und dem Kontaktvorrichtungsdeckelement (22) ausgebildeten Kontaktvorrichtungsaufnahme (26) angeordnet ist,
**dadurch gekennzeichnet, daß**
das Vergußelement (24) als Gußteil ausgebildet ist, wobei das Material des Vergußelements (24) flüssig auf das Grundelement (20) und das Kontaktvorrichtungsdeckelement (22) aufgetragen und danach abgekühlt und/oder ausgehärtet ist, wobei eine innige Verbindung mit dem Grundelement (20), dem Kontaktvorrichtungsdeckelement (22) und dem zumindest einen Anschlußelement (8a, 8b) aufweist, um das Kontaktvorrichtungsdeckelement (22) mit dem Grundelement (20) zu verbinden und
wobei die Kontaktvorrichtungsaufnahme (26) im wesentlichen frei von dem Vergußelement (24) ist.

2. Anschlußdose (10) nach Anspruch 1, wobei die Kontaktvorrichtung (12) zumindest ein Halbleiterbauteil (16a, 16b, 16c) aufweist, welches zwei Leiteranschlußelemente (14a, 14b) und/oder zumindest zwei der Kontaktelemente (18a-18d) und oder ein Leiteranschlußelement (14a, 14b) mit einem der Kontaktelemente (18a-18d) elektrisch verbindet und
wobei das zumindest eine Halbleiterbauteil (16a, 16b, 16c) von dem Vergußelement (24) beabstandet ist.

3. Anschlußdose (10) nach Anspruch 1 oder 2, wobei das Kontaktvorrichtungsdeckelement (22) mit dem Grundelement (20) verriegelbar ist.

4. Anschlußdose (10) nach einem der vorigen Ansprüche, wobei das Kontaktvorrichtungsdeckelement (22) zumindest eine Öffnung (30a, 30b) aufweist, durch welche ein zugeordnetes der Leiteranschlußelemente (14a, 14b) zugänglich ist oder durch welche ein zugeordnetes der Leiteranschlußelemente (14a, 14b) hindurchragt, um mit dem elektrischen Leiter (9a, 9b) des Anschlußelementes (8a, 8b) kontaktiert zu sein.

5. Anschlußdose (10) nach einem der vorigen Ansprüche, wobei die Gehäusevorrichtung zumindest eine Leiteraufnahmeeinrichtung (34) mit einer leiterplattenseitigen Öffnung (36) und einer Montageöffnung (38) aufweist, wobei die Kontaktelemente (18a-18d) derart in der Leiteraufnahmeeinrichtung (34) angeordnet sind, daß jedes der Kontaktelemente (18a-18d) durch einen zugeordneten elektrischen Leiter (6a-6d) der Leiterplatte (4) kontaktierbar ist und die Montageöffnung (38) feuchtigkeitsdicht durch einen Deckel verschließbar ist.

6. Anschlußdose (10) nach einem der vorigen Ansprüche, wobei das Vergußelement (24) aus einem weicheren Material besteht als das Grundelement (20) und/oder das Kontaktvorrichtungsdeckelement (22).

7. Verfahren zum Herstellen einer Anschlußdose für eine Leiterplatte (4) umfassend die folgenden Schritte:
- Bereitstellen eines Grundelements (20) einer Gehäusevorrichtung ;
- Bereitstellen eines Kontaktvorrichtungsdeckelements (22) der Gehäusevorrichtung;
- Anordnen einen Kontaktvorrichtung (12) mit zumindest einem Leiteranschlußelement (14a, 14b) und zumindest einem Kontaktelement (18a-18d) an das Grundelement (20) oder das Kontaktvorrichtungsdeckelement (22);
- Anordnen eines Kontaktvorrichtungsdeckelements (22) an das Grundelement (20), wobei die Kontaktvorrichtung (12) bereichsweise zwischen dem Grundelement (20) und dem Kontaktvorrichtungsdeckelement (22) eingeschlossen ist;
- Kontaktieren zumindest eines elektrischen Leiters (9a, 9b) des zumindest einen Anschlußelements (8a, 8b) an das zugeordnete Leiteranschlußelement (14a, 14b) der Kontaktvorrichtung (12);
- Ausbilden des Vergußelements (24) durch ein flüssiges Auftragen einer Gießmasse auf das Grundelement (20), das Kontaktvorrichtungsdeckelement (22) und das zumindest eine Anschlußelement (8a, 8b), wobei eine innige Verbindung zwischen diesen Elementen ausgebildet wird, um das Kontaktvorrichtungsdeckelement (22) mit dem Grundelement (20) zu verbinden und
wobei der zwischen dem Grundelement (20) und dem Kontaktvorrichtungsdeckelement (22) eingeschlossene Bereich der Kontaktvorrichtung (12) im wesentlichen frei von dem Vergußelement (24) bleibt.

8. Verfahren nach Anspruch 7, wobei das Kontaktvorrichtungsdeckelement (22) mit dem Grundelement (20) verriegelt wird.

9. Verfahren nach einem der Ansprüche 7 oder 8, wobei die Gießmasse ein Thermoplast ist und die Temperatur der Kontaktvorrichtung (12) während des Ausbildens des Vergußelements (24) vorzugsweise eine Temperatur von 150 Grad Celsius nicht überschreitet.

10. Verwendung einer Anschlußdose (10) gemäß eines der Ansprüche 1 bis 6 und eines Solarmoduls (4) als bevorzugte Leiterplatte (4) zum Bereitstellen eines Solarpaneels (2), wobei die Anschlußdose (10) an dem Solarmodul (4) befestigt wird und die elektrischen Leiter (6a-6d) des Solarmoduls (4) mit den zugeordneten Kontaktelementen (18a-18d) der Anschlußdose kontaktiert werden.

## Claims

1. A junction box (10) for a conductive panel (4), in particular for a solar module (4), comprising:
- a housing device with a base element (20), a contact device cover element (22) and a cast element (24);
- a contact device (12) with at least one conductor connecting element (14a, 14b) and at least one contact element (18a-18d), wherein each of the contact elements (18a-18d) can be contacted to an electrical conductor (6a-6d) of the conductive panel (4);
- at least one connecting element (8a, 8b) with at least one electrical conductor (9a, 9b), wherein the electrical conductor (9a, 9b) contacts an associated conductor connecting element (14a, 14b) of the contact device (12),
wherein the contact device (12) is sectionally arranged in a contact device seat (26) formed by the base element (20) and the contact device cover element (22),
**characterized in that**
the cast element (24) is designed as a cast part, wherein the material of the cast element (24) is applied liquid onto the base element (20), and the contact device covering element (22) is applied and then cooled and/or hardened, wherein a tight bond is formed with the base element (20), the contact device covering element (22) and the at least one connecting element (8a, 8b) in order to connect the contact device cover element (22) with the base element (20), and
wherein the contact device seat (26) is essentially free from the cast element (24).

2. The junction box (10) according to claim 1, wherein the contact device (12) has at least one semi-conductor component (16a, 16b, 16c) that electrically connects two conductor connecting elements (14a, 14b), and/or at least two of the contact element (18a-18d), and/or a conductor connecting element (14a, 14b) to one of the contact elements (18a-18d), and wherein the at least one semi-conductor component (16a, 16b, 16c) is at a distance from the cast element (24).

3. The jjunction box (10) according to claim 1 or 2, wherein the contact device covering element (22) can be locked to the base element (20).

4. The junction box (10) according to one of the preceding claims, where the contact device covering element (22) has at least one opening (30a, 30b) through which an associated one of the conductor connecting elements (14a, 14b) is accessible, or through which an associated one of the conductor connecting elements (14a, 14b) extends in order to be in contact with the electrical conductor (9a, 9b) of the connecting element (8a, 8b).

5. The junction box (10) according to one of the preceding claims, wherein the housing device has at least one conductor seating apparatus (34) with a conductor panel-side opening (36) and an installation opening (38), wherein the contact elements (18a-18d) are arranged in the conductor seating apparatus (34) such that each of the contact elements (18a-18d) can be contacted to an associated electrical conductor (6a-6d) of the conductor panel (4), and the installation opening (38) can be sealed moisture-tight by a cover.

6. The junction box (10) according to one of the preceding claims, wherein the cast element (24) consists of a material that is softer than the base element (20) and/or the contact device covering element (22).

7. A method for producing a junction box for a conductor panel (4) comprising the following steps:
- provide a base element (20) of a housing device;
- provide a contact device covering element (22) of the housing device;
- arrange a contact device (12) with at least one conductor connect element (14a, 14b) and at least one contact element (18a-18d) on the base element (20) or the contact device covering element (22);
- arrange a contact device covering element (22) on the base element (20), wherein the contact device (12) is sectionally enclosed between the base element (20) and the contact device covering element (22);
- contact at least one electrical conductors (9a, 9b) of the at least one connection element (8a, 8b) to the associated conductor connecting element (14a, 14b) of the contact device (12);
- form the cast element (24) by liquid application of a casting compound on the base element (20), the contact device covering element (22) and the at least one connecting element (8a, 8b), wherein a tight bond is formed between these elements in order to bond the contact device covering element (22) to the base element (20), and
- wherein the area of the contact device (12) between the base element (20) and the contact device covering element (22) remains substantially free of casting compound (24).

8. The method according to claim 7, wherein the contact device covering element (22) is locked to the base element (20).

9. The method according to one of claims 7 or 8, wherein the casting compound is a thermoplastic, and the temperature of the contact device (12) preferably does not exceed a temperature of 150°C while the cast element (24) is being formed.

10. A use of a junction box (10) according to one of claims 1 to 6 and a solar module (4) as the preferred conductor panel (4) for providing a solar panel (2), wherein the junction box (10) is fastened to the solar module (4), and the electrical conductors (6a-6d) of the solar module (4) are contacted to the associated contact elements (18a-18d) of the junction box.

## Revendications

1. Boîte de jonction (10) pour une carte à circuit imprimé (4), en particulier pour un module solaire (4), comportant :
- un dispositif boîtier avec un élément de base (20), un élément de recouvrement de dispositif de contact (22) et un élément de scellement (24);
- un dispositif de contact (12) avec au moins un élément de jonction de conducteur (14a, 14b) et au moins un élément de contact (18a-18d), où chacun des éléments de contact (18a-18d) est susceptible d'être mis en contact avec un conducteur électrique (6a-6d) de la carte à circuit imprimé (4) ;
- au moins un élément de jonction (8a, 8b) avec au moins un conducteur électrique (9a, 9b), où le conducteur électrique (9a, 9b) entre en contact avec un élément de jonction de conducteur associé (14a, 14b) du dispositif de contact (12),
où le dispositif de contact (12) est agencé, par endroits, dans un logement de dispositif de contact (26) formé par l'élément de base (20) et l'élément de recouvrement de dispositif de contact (22),
**caractérisée en ce que**
l'élément de scellement (24) est conçu en tant que pièce coulée, où le matériau de l'élément de scellement (24) est appliqué à l'état liquide sur l'élément de base (20) et sur l'élément de recouvrement de dispositif de contact (22) et est par la suite refroidi et/ou durci, où il présente une liaison intime avec l'élément de base (20), l'élément de recouvrement de dispositif de contact (22) et ledit au moins un élément de contact (8a, 8b) afin de relier l'élément de recouvrement de dispositif de contact (22) à l'élément de base (20) et
où le logement de dispositif de contact (26) est essentiellement dépourvu d'élément de scellement (24).

2. Boîte de jonction (10) selon la revendication 1, où le dispositif de contact (12) présente au moins un dispositif semi-conducteur (16a, 16b, 16c), lequel relie électriquement deux éléments de jonction de conducteur (14a, 14b) et/ou au moins deux des éléments de contact (18a-18d) et/ou un élément de jonction de conducteur (14a, 14b) à un des éléments de contact (18a-18d) et où ledit au moins un dispositif semi-conducteur (16a, 16b, 16c) est espacé de l'élément de scellement (24).

3. Boîte de jonction (10) selon la revendication 1 ou 2, où l'élément de recouvrement de dispositif de contact (22) est susceptible d'être verrouillé avec l'élément de base (20).

4. Boîte de jonction (10) selon l'une quelconque des revendications précédentes, où l'élément de recouvrement de dispositif de contact (22) présente au moins une ouverture (30a, 30b), à travers laquelle un élément associé des éléments de jonction de conducteur (14a, 14b) est accessible ou à travers laquelle un élément associé des éléments de jonction de conducteur (14a, 14b) dépasse afin d'entrer en contact avec le conducteur électrique (9a, 9b) de l'élément de jonction (8a, 8b).

5. Boîte de jonction (10) selon l'une quelconque des revendications précédentes, où le dispositif boîtier présente au moins un dispositif récepteur de conducteur (34) avec une ouverture côté carte à circuit imprimé (36) et une ouverture de montage (38), où les éléments de contact (18a-18d) sont agencés de telle sorte dans le dispositif récepteur de conducteur (34) que chacun des éléments de contact (18a-18d) est susceptible d'être mis en contact avec un conducteur électrique associé (6a-6d) de la carte à circuit imprimé (4) et l'ouverture de montage (38) est susceptible d'être verrouillée à l'aide d'un couvercle de sorte à être étanche à l'humidité.

6. Boîte de jonction (10) selon l'une quelconque des revendications précédentes, où l'élément de scellement (24) est constitué d'un matériau plus souple que celui de l'élément de base (20) et/ou de l'élément de recouvrement de dispositif de contact (22).

7. Procédé de production d'une boîte de jonction pour une carte à circuit imprimé (4), comportant les étapes suivantes :
- mise à disposition d'un élément de base (20) d'un dispositif boîtier ;
- mise à disposition d'un élément de recouvrement de dispositif de contact (22) du dispositif boîtier ;
- agencement d'un dispositif de contact (12) avec au moins un élément de jonction de conducteur (14a, 14b) et au moins un élément de contact (18a-18d) sur l'élément de base (20) ou l'élément de recouvrement de dispositif de contact (22) ;
- agencement d'un élément de recouvrement de dispositif de contact (22) sur l'élément de base (20), où le dispositif de contact (12) est renfermé, par endroits, entre l'élément de base (20) et l'élément de recouvrement de dispositif de contact (22) ;
- entrée en contact d'au moins un conducteur électrique (9a, 9b) d'au moins un élément de jonction (8a, 8b) sur l'élément de jonction de conducteur (14a, 14b) associé du dispositif de contact (12) ;
- formation de l'élément de scellement (24) par l'application, à l'état liquide, d'une masse coulée sur l'élément de base (20), l'élément de recouvrement de dispositif de contact (22) et sur au moins un élément de jonction (8a, 8b), où une liaison intime est formée entre ces éléments afin de relier l'élément de recouvrement de dispositif de contact (22) à l'élément de base (20) et
où la partie du dispositif de contact (12) renfermée entre l'élément de base (20) et l'élément de recouvrement de dispositif de contact (22) reste essentiellement dépourvue d'élément de scellement (24).

8. Procédé selon la revendication 7, où l'élément de recouvrement de dispositif de contact (22) est verrouillé avec l'élément de base (20).

9. Procédé selon une des revendications 7 ou 8, où la masse coulée est un thermoplastique et la température du dispositif de contact (12), pendant la formation de l'élément de scellement (24), ne dépasse pas, de préférence, une température de 150 degrés Celsius.

10. Utilisation d'une boîte de jonction (10) selon une des revendications de 1 à 6 et d'un module solaire (4) en tant que carte à circuit imprimé (4) préférée pour mettre à disposition un panneau solaire (2), où la boîte de jonction (10) est fixée sur le module solaire (4) et le conducteur électrique (6a-6d) du module solaire (4) est mis en contact avec les élément de contact associés (18a-18d) de la boîte de jonction.
